# EUROPEAN PATENT APPLICATION

(11) **EP 1 792 942 A1**
(43) Date of publication of application: **06.06.2007**
(21) Application number: 05776949.9
(22) Date of filing: 29.08.2005
(51) Int. Cl.: C08L 77/06, C08L 77/12

(54) **THERMOPLASTIC RESIN COMPOSITION**

(30) Priority: 31.08.2004 JP 2004252278
(71) Applicant: Polyplastics Co., Ltd., Tokyo 108-8280 (JP)
(72) Inventor: TAGUCHI, Yoshiaki c/o Polyplastics Co., Ltd., Fuji-shi, Shizuoka 416-8533 (JP); KATSUMATA, Toru c/o Polyplastics Co., Ltd., Fuji-shi, Shizuoka 416-8533 (JP); SHIWAKU, Toshio c/o Polyplastics Co., Ltd., Fuji-shi, Shizuoka 416-8533 (JP)
(74) Representative: Peel, James Peter
(86) International application number: PCT/JP2005/016153
(87) International publication number: WO 2006/025538

(57) **Abstract**

A purpose of the invention is to provide a thermoplastic resin composition which enhances crystallization during molding, has high thermal deformation temperature, has high rigidity, induces less pealing on the molding surface, and gives excellent appearance, thus being preferably used as the facility parts of automobiles, and those of electric and electronics products. The (A) 100 parts by weight of a polyamide resin structured by the following monomers (1) and (2) is blended with (B) 5 to 100 parts by weight of a liquid crystalline polyester amide resin:
(1) a diamine component containing an aliphatic diamine component unit having 4 to 12 carbon atoms arranged in straight chain and/or an aliphatic diamine component unit having 4 to 12 carbon atoms having side chain, and a derivative thereof; and
(2) a dicarboxylic acid component containing 40 to 100% by mole of terephthalic acid component unit and 0 to 60% by mole of isophthalic acid component unit, and a derivative thereof.

## Description

### Technical Field

The present invention relates to a thermoplastic resin composition, suitable for injection-molded products and the like, composed of a polyamide resin and a liquid-crystalline polyester amide resin, and specifically to a thermoplastic resin composition which enhances the crystallization of the polyamide resin as the matrix, improves the thermal deformation temperature, and provides excellent appearance of the molded articles.

### Prior Art

Liquid-crystalline resins have been favorably used in variety of fields as high functional engineering plastics owing to their well-balanced properties of excellent flowability, mechanical strength, heat resistance, chemical resistance, and electric property.

In the significant industrial development in these years, the application fields of the liquid-crystalline resins have further widened, and have shown further upgrading and specifying. Accordingly, with the utilization of high flowability of liquid-crystalline resins, the liquid-crystalline resins are expected to provide injection molded articles and the like, which products maintain their superior physical properties through the efficient and economic molding process such as injection molding. For instance, the external plates of automobiles, the cases of electric and electronic apparatuses, and the like are requested to have high level of mechanical characteristics and of heat resistance in order to attain reduced weight and thickness of the molded articles, and further are requested to use resin materials that can provide large size and high grade appearance of the molded articles. The liquid-crystalline resins are, however, not welcomed to the external plates of automobiles, cases of electric and electronic apparatuses, and the like because of the appearance of their molded articles, and further they are difficult in general-purpose use for large size products from the point of cost.

On the other hand, conventional polyamide resins have a drawback of slow crystallization, though they give superior appearance of molded articles. Accordingly, they have a problem of difficult to attain their intrinsic characteristics unless they are subjected to heat treatment after molding to enhance the crystallization.

Resin compositions of polyamide resin and liquid-crystalline resin have been studied. For example, JP-A 56-115357 and JP-A 5-156157 improve the flowability or the mechanical characteristics by a resin composition of polyamide resin and liquid-crystalline resin. For applying that type of resin composition to the structural parts of automobiles and of electric and electronic apparatuses, however, heat resistance is further required. In addition, from the point of enhancing the crystallization contributing to the shortening of molding cycle considering economy, the technologies of above related art cannot be said to solve the problem.

### Disclosure of the Invention

An purpose of the present invention is to provide a thermoplastic resin composition which solves the above problems of the related art, enhances crystallization during molding, and has excellent thermal deformation temperature, high rigidity, little delamination on the surface of molded product, and excellent appearance of molded article, and which is suitably used for structural parts of automobiles and of electric and electronic apparatuses.

The inventors of the present invention intensively studied to achieve the above purpose, and found that the blend of a liquid-crystalline polyester amide resin with a specific polyamide resin as the matrix enhances the crystallization of the specific polyamide resin as the matrix during molding, thus improving the heat resistance and rigidity, and further attaining high grade appearance, thereby accomplished the present invention.

The present invention is a thermoplastic composition composed of 100 parts by weight of (A) a polyamide resin and 5 to 100 parts by weight of (B) a liquid-crystalline polyester amide resin, the (A) polyamide resin being structured by the structural units of (1) and (2) :
(1) a diamine-derived structural unit composed of a structural unit derived from an aliphatic diamine containing 4 to 12 carbons, in a straight chain structure, and/or a structural unit derived from an aliphatic diamine containing 4 to 12 carbons, having a side chain; and
(2) a dicarboxylic acid-derived structural unit composed of 40 to 100% by mole of a terephthalic acid-derived structural unit and 0 to 60% by mole of an isophthalic acid-derived structural unit.

The (2) of the (A) polyamide resin may be the following: (2) a dicarboxylic acid-derived structural unit composed of 40 to 100% by mole of a terephthalic acid-derived structural unit and 0 to 60% by mole of at least one structural unit selected from the group consisting of an isophthalic acid-derived structural unit and a structural unit derived from an aliphatic dicarboxylic acid containing 4 to 20 carbons.

The present invention is further an injection-molded product composed of the above thermoplastic resin composition.

The present invention is further an application for manufacturing injection-molded product of the above thermoplastic resin composition.

The thermoplastic resin composition composed of the (A) specific polyamide resin and the (B) liquid-crystalline polyester amide resin, according to the present invention, is suitable for structural parts of automobiles, of electric and electronic apparatuses, and the like because the thermoplastic resin composition enhances the crystallization thereof during molding, thus improving the heat resistance and rigidity, and further giving little delamination of the surface of the molded product with high grade appearance.

### Detail Description of the Invention

The resin composition structuring the present invention is described below in detail. The (A) polyamide resin according to the present invention is a polyamide having diamine and dicarboxylic acid as the main structural components, and specifically the one being structured by the above (1) and (2) structural units.

Regarding the above (2), there may be included a dicarboxylic acid-derived structural unit composed of 0 to 60% by mole of at least one structural unit selected from the group consisting of an isophthalic acid-derived structural unit and a structural unit derived from an aliphatic dicarboxylic acid containing 4 to 20 carbons.

Furthermore, it is preferable that the aliphatic diamine-derived structural unit in (1) and the aliphatic dicarboxylic acid-derived structural unit in (2) are each a structural unit containing 4 or more carbons because the melting point of the polyamide resin becomes close to the decomposition temperature thereof. It is preferable that the aliphatic diamine-derived structural unit in (1) contains 12 or less of carbons because the melting point of the polyamide resin becomes high and the crystallization rate thereof is high. It is also preferable that the aliphatic dicarboxylic acid-derived structural unit in (2) contains 20 or less of carbons because the melting point of the polyamide resin becomes high and the crystallization rate thereof is high.

It is more preferable that the aliphatic diamine-derived structural unit in (1) and the aliphatic dicarboxylic acid-derived structural unit in (2) contain 4 to 10 carbons thereeach.

Specifically, the aliphatic diamine monomer structuring the aliphatic diamine-derived structural unit in (1) is further preferably hexamethylene diamine or nonamethylene diamine.

Specifically, the aliphatic dicarboxylic acid monomer structuring the aliphatic dicarboxylic acid-derived structural unit in (2) is further preferably succinic acid, adipic acid, suberic acid, or sebacic acid.

As for these polyamide resins being structured by those structural units, the one having 270°C or higher melting point is useful in relation to the melting point of (B) liquid-crystalline polyester amide resin which is described later, and the one having melting point between 300°C and 370°C is more useful. Examples of that kind of polyamide resin are polyhexamethylene terephthalamide (Nylon 6T), polyhexamethylene terephthalamide/polyhexamethylene isophthalamide copolymer (Nylon 6T/6I), polyhexamethylene phthalamide/polydihexamethylene amide copolymer (Nylon 6T/66), and polynonamethylene terephthalamide (Nylon 9T). The polyamide resin according to the present invention may use two or more of them. Those polyamide resins (A) can be obtained by a known method or can use commercially available ones in the present invention.

The (B) liquid-crystalline polyester amide resin in the present invention is a melt-processable polyester amide having a melting point in a range from 270°C to 370°C, and having a property capable of forming an optical anisotropic molten phase. The property of the anisotropic molten phase can be identified by a common polarization test using crossed polarizers. In more detail, the anisotropic molten phase can be confirmed by the observation with Leitz polarization microscope (x40 magnification) placing a molten specimen on Leitz hot stage in nitrogen atmosphere. When the liquid-crystalline polyester amide applicable to the present invention is inspected between crossed polarizers, the polarized light normally transmits therethrough, and the liquid-crystalline polyester amide shows optical anisotropy even in a molted and stationary state.

The liquid-crystalline polyester amide applied to the present invention having a property capable of forming the above optical anisotropic molten phase is, however, not satisfactory, and preferably the liquid-crystalline polyester amide further has a specific structural unit.

That is, the monomer structuring the (B) liquid-crystalline polyester amide resin includes aromatic hydroxycarboxylic acid, aromatic dicarboxylic acid, and aromatic diol. Adding to these monomers, the (B) liquid-crystalline polyester amide resin contains one or more of 4-aminophenol, 1,4-phenylenediamine, 4-aminobenzoic acid, and a derivative of them, and the content of the amide component is, in view of enhancing the crystallization or of strength of (B), preferably from 2 to 35% by mole, and more preferably from 15 to 35% by mole.

The applicable aromatic hydroxycarboxylic acid includes 4-hydroxybenzoic acid, and 6-hydroxy-2-naphthoic acid. The applicable aromatic carboxylic acid includes terephthalic acid, isophthalic acid, 4,4'-diphenyldicarboxylic acid, and 2,6-naphthalenedicarboxylic acid. The applicable aromatic diol includes 2,6-dihydroxynaphthalene, 4,4'-dihydroxybiphenyl, hydroquinone, and resorcin. Derivatives of those compounds are also the applicable monomers.

The monomer to provide 2 to 35% by mole of amide component includes the above-given 4-aminophenol, 1, 4-phenylenediamine, 4-aminobenzoic acid, and their derivatives.

Specifically, the (B) liquid-crystalline polyester amide resin is preferably an all-aromatic polyester amide prepared by copolymerization of the monomers of (i) to (iii) in a range given below:
(i) 6-hydroxy-2-naphthoic acid: 30 to 90% by mole,
(ii) 4-aminophenol: 15 to 35% by mole, and
(iii) terephthalic acid: 15 to 35% by mole.

Alternatively, the (B) liquid-crystalline polyester amide resin is preferably an all-aromatic polyester amide prepared by copolymerization of the following monomers (i) to (v) in a range given below:
(i) 6-hydroxy-2-naphthoic acid,
(iv) 4-hydroxybenzoic acid,
   30 to 90% by mole as the sum of (i) and (iv),
(ii) 4-aminophenol: 2 to 35% by mole,
(iii) terephthalic acid: 5 to 35% by mole, and
(v) bisphenol: 2 to 35% by mole.

Among these, a specifically preferred liquid-crystalline polyester amide resin is a resin composed of:
(i) 6-hydroxy-2-naphtoic acid: 30 to 90% by mole,
(ii) 4-aminophenol: 15 to 35% by mole,
(iii) terephthalic acid: 15 to 35% by mole,
   containing 4-amionophenol in an amount from 15 to 35% by mole.

According to the present invention, the mixing ratio of the (A) polyamide resin and the (B) liquid-crystalline polyester amide resin is 100 parts by weight of the (A) polyamide resin and 5 to 100 parts by weight of the (B) liquid-crystalline polyester amide resin. If the mixing amount of the (B) liquid-crystalline polyester amide resin is less than 5 parts by weight, the effect of enhancing the crystallization, which is an purpose of the present invention, becomes small. If the mixing amount of the (B) liquid-crystalline polyester amide resin exceeds 100 parts by weight, the (A) polyamide resin becomes difficult to form the matrix, which is unfavorable. Specifically preferable mixing ratio is 100 parts by weight of the (A) polyamide resin and 10 to 40 parts by weight of the (B) liquid-crystalline polyester amide resin.

Furthermore, the thermoplastic resin composed of the (A) polyamide resin and the (B) liquid-crystalline polyester amide resin preferably satisfies at least one condition of (1) and (2) in the measurement by a differential scanning calorimeter (DSC) :
(1) In the measurement by the differential scanning colorimeter (DSC), the crystallization temperature (Tc) of the thermoplastic resin composition shall be higher by 5°C or more than the crystallization temperature (Tc) of the (A) polyamide resin as the matrix resulted from the addition of the (B) liquid-crystalline polyester amide resin; and
(2) The difference (ΔTc) between the on-set temperature and the peak top temperature of the crystallization temperature peak curve shall be not higher than 5°C.

Alternatively, in the measurement by the differential scanning colorimeter (DSC), it is preferable that the crystallization temperature (Tc) of the thermoplastic resin is higher by 5°C or more than the crystallization temperature (Tc) of the (A) polyamide resin as the matrix resulted from the addition of the (B) liquid-crystalline polyester amide resin. Determination of the crystallization temperature can be done by a commercially available differential scanning calorimeter (DSC).

Regarding the conditions for measurement, the initiation temperature is based on the melting point of the (A) polyamide resin or the (B) liquid-crystalline polyester amide resin, higher melting point thereof (the basis temperature), and the measurement begins at +20°C above the basis temperature, then the initiation temperature is held for 3 minutes, followed by cooling to room temperature at a rate of 10°C/min.

The resin composition according to the present invention may further contain various inorganic fillers in a shape of fiber, powder or granule, or plate depending on the use object.

Examples of applicable fibrous filler are inorganic fibrous materials such as glass fiber, asbestos fiber, silica fiber, silica-alumina fiber, alumina fiber, zirconia fiber, boron-nitride fiber, silica-nitride fiber, boron fiber, potassium titanate fiber, silicate fiber such as wollastonite, magnesium sulfate fiber, aluminum borate fiber, and metallic fibrous materials such as those of stainless steel, aluminum, titanium, copper or brass. In particular, glass fiber is a typical fibrous filler. High melting point organic fibrous materials such as polyamide resin, fluororesin, polyester resin, and acrylic resin are also applicable.

As for the powdery or granular filler, there are included: carbon black; graphite; silica, quartz powder, glass beads, milled glass fiber, glass balloon, glass powder, silicate such as calcium silicate, aluminum silicate, kaolin, clay, diatomaceous earth or wollastonite; metal oxide such as iron oxide, titanium oxide, zinc oxide, antimony trioxide or alumina; metal carbonate such as calcium carbonate or magnesium carbonate; metal sulfate such as calcium sulfate or barium sulfate; ferrite; silicon carbide; silicon nitride; boron nitride; and various metal powders.

The plate shape filler includes mica, glass flake, talc, and various metal foils.

These inorganic fillers may be used separately or in combination of two or more of them. However, addition of large amount of inorganic filler significantly deteriorates the toughness so that the added amount of the inorganic filler is preferably adjusted in a range from 5 to 40% by weight in the composition. From the point of improving rigidity, at least one of the inorganic fillers is preferably glass fiber.

On using these fillers, a sizing agent or a surface treatment agent may be added, as needed.

The thermoplastic resin composition according to the present invention may further contain a thermoplastic resin other than those given above as an auxiliary within a range not affecting the purpose of the present invention.

Examples of those additional thermoplastic resins are: polyolefin such as polyethylene or polypropylene, aromatic polyester composed of aromatic dicarboxylic acid and diol such as polyethylene terephthalate or polybutylene terephthalate, and the like; polyacetal (homo- or copolymer), polystyrene, polyvinyl chloride, polycarbonate, ABS, polyphenylene oxide, polyphenylene sulfide, and fluororesin. Those thermoplastic resins may be applied separately or in combination of two or more of them.

An example of the manufacturing method for the resin composition according to the present invention is simultaneous melting and kneading of individual components of polyamide resin, liquid-crystalline polyamide resin, and, as needed, inorganic filler, and the like in an extruder. From the point of suppression of resin decomposition, the melting point for the melting and kneading is preferably in a range from 300°C to 360°C.

Alternatively, the kneading may be given using a master batch prepared by preliminarily melting and kneading any of above-components. The resin composition obtained by melting and kneading in the extruder is preferably cut in pellets by a pelletizer, and then injection-molded to form a molded product.

### Examples

The present invention is described below in more detail referring to Examples. However, the present invention is not limited to those Examples. The methods to determine the physical properties in Examples are as follows.

### (Melting point, crystallization temperature, crystallization heat capacity)

These characteristics were determined by a differential scanning calorimeter (DSC7, manufactured by Perkin Elmer, Inc.) under a temperature increase/decrease rate of 10°C/min.

### (Melt viscosity)

The melt viscosity was determined by Capillograph 1B (manufactured by Toyo Seiki Seisakusho, Ltd.) with an orifice of 1 mm in inner diameter and 20 mm in length, under a condition of 1000 sec⁻¹ of shear rate at a specified temperature. The determination of melt viscosity of the composition using a resin C2000 (manufactured by Mitsui Chemicals, Inc.) was conducted at 320°C, and the melt viscosity of the composition using a resin A3000 (manufactured by Mitsui Chemicals, Inc.) was conducted at 340°C.

### (Deflection temperature under loading)

The property was determined in accordance with ISO 75/A under 1.8 MPa of measurement pressure.

### (Flexural modulus)

The flexural modulus was determined in accordance with ASTM D790 using an injection-molded piece having a size of 125 mm x 12.7 mm x 0.8 mm.

### Manufacture Example 1 (Manufacture of liquid-crystalline polyester amide <1>)

The following-listed raw material monomer, catalyst, and acylation agent were charged to a polymerization vessel equipped with an agitator, a reflux column, a monomer charge opening, a nitrogen feed opening, and an evacuation/discharge line. The atmosphere in the vessel was replaced by nitrogen.
(A) 6-Hydroxy-2-naphthoic acid: 225.90 g (60% by mole)
(B) Terephthalic acid: 66.48 g (20% by mole)
(C) 4-Acetoxy-aminophenol: 60.48 g (20% by mole)
   Potassium acetate: 22.5 mg
   Acetic anhydride: 166.67 g

After charging the raw materials, the temperature of the reaction system was raised to 140°C to perform the reaction at the temperature for one hour. After that, the reaction system was further heated to 330°C over 3.3 hours, from which state the reaction system was evacuated to 10 Torr (1330 Pa) over 20 minutes, thus conducted the melt-polymerization while distilling acetic acid, excess acetic anhydride, and other low boiling components. After the agitation torque reached a specified level, nitrogen gas was introduced to the system to recover the system from evacuated state to atmosphere, and then to pressurized state; thus discharged the polyester amide <1> from the bottom of the polymerization vessel.

### Manufacture Example 2 (Manufacture of liquid-crystalline polyester amide <2>)

The polyester amide <2> was prepared by the same procedure to that of Manufacture Example 1 except that the raw material monomer, the catalyst, and the acylation agent adopted the following-listed respective ones, and that the temperature rise to 330°C was conducted over 3.5 hours.
(A) 4-Hydroxybenzoic acid: 188.25 g (60% by mole)
(B) 6-Hydroxy-2-naphthoic acid: 21.37 g (5% by mole)
(C) Terephthalic acid: 66.04 g (17.5% by mole)
(D) 4,4'-Biphenol: 52.87 g (12.5% by mole)
(E) 4-Acetoxy-aminophenol: 17.17 g (5% by mole)
   Potassium acetate: 50 mg
   Acetic anhydride: 226.31 g

### Manufacture Example 3 (Manufacture of liquid-crystalline polyester <3>)

The polyester <3> was prepared by the same procedure to that of Manufacture Example 1 except that the raw material monomer, the catalyst and the acylation agent adopted the following-listed respective ones, and that the temperature rise to 330°C was conducted within 3.5 hours.
(A) 4-Hydroxybenzoic acid: 226.4 g (73% by mole)
(B) 6-Hydroxy-2-naphthoic acid: 114.1 g (27% by mole)
   Potassium acetate: 22.5 mg
   Acetic anhydride: 233.8 g

Thus obtained polyester amides <1> and <2> and polyester <3> were observed by a polarization microscope under crossed nicols at 300°C in a molten state, (360°C in a molten state for <2>). They showed distinctive optical anisotropy, and they were confirmed as the thermotropic liquid-crystalline resins. The characteristics of individual liquid-crystalline resins are shown in Table 1.

**Table 1**

| Polymer | Polyester amide <1> | Polyester amide <2> | Polyester amide <3> |
|---|---|---|---|
| Melting point (°C) | 280 | 340 | 280 |
| Melt viscosity (Pa·s) (Temperature of measurement: Melting point + 20°C) | 86 | 34 | 60 |

### Examples 1 to 4, Comparative Examples 1 to 4

As shown in Table 2, the liquid-crystalline polyester amides <1> and <2>, the liquid-crystalline polyester <3>, the polyamide (C2000 (Nylon 6T/66) and A3000 (Nylon 6T/6I), manufactured by Mitsui Chemicals, Inc.) were dry-blended at the respective ratios given in Table 2. Then, each of those mixtures was melted and kneaded in a twin screw extruder (PCM-30, manufactured by Ikegai Co., Ltd.) at a cylinder temperature of 320°C (for using C2000 as the polyamide) or 340°C (for using A3000 as the polyamide), thus formed pellets. These pellets were molded to prepare test pieces under the condition given below by an injection molding machine, and the above-mentioned were evaluated. The results are given in Table 2.

### (Condition of injection molding)

Molding machine: JSW J75SSII-A
Cylinder temperature: 320-320-310-300°C (for using C2000 as the polyamide)
Cylinder temperature: 340-340-330-320°C (for using A3000 as the polyamide)
Mold temperature: 120°C
Injection rate: 2 m/min
Pressure-holding force: 58.8 MPa
Cycle: Injection pressure holding 7 sec + Cooling molding 20 sec
Screw rotational speed: 100 ppm
Screw backpressure: 3.5 MPa

**Table 2**

| | Comparative Example 1 | 1 Example | Example 2 | Comparative 2 | Comparative Example 3 | Example 3 | Example 4 | Comparative 4 |
|---|---|---|---|---|---|---|---|---|
| Polyamide (C2000) (parts by weight) | 100 | 100 | 100 | 100 | | | | |
| Polyamide (A3000) (parts by weight) | | | | | 100 | 100 | 100 | 100 |
| Polyester amide <1> (parts by weight) | | 5 | 18 | | | 18 | | |
| Polyester amide <2> (parts by weight) | | | | | | | 18 | |
| Polyester amide <3> (parts by weight) | | | | 18 | | | | 18 |
| Flexural modulus (Mpa) | 3300 | 3600 | 3700 | 3400 | 3100 | 4700 | 3900 | 3600 |
| Deflection temperature under loading (°C) | 104 | 131 | 144 | 118 | 142 | 143 | 141 | 136 |
| Crystallization temperature (Tc) (°C) | 268.9 | 278.5 | 282.2 | 279.6 | 272.3 | 280.4 | 278.5 | 272.5 |
| Difference in Tc from polyamide (°C) | - | 9.6 | 13.3 | 10.7 | - | 8.1 | 6.2 | 0.2 |
| ΔT(°C) | 4.6 | 5.0 | 4.4 | 5.4 | 4.9 | 5.9 | 5.0 | 8.5 |
| Melt viscosity (Pa·s) | 204 | 138 | 87 | 66 | 137 | 22 | 46 | 45 |

## Claims

1. A thermoplastic resin composition comprising: (A) 100 parts by weight of a polyamide resin; and (B) 5 to 100 parts by weight of a liquid crystalline polyester amide resin; the (A) polyamide resin being configured by monomers (1) and (2):
(1) a diamine component comprising an aliphatic diamine component unit having 4 to 12 carbon atoms arranged in straight chain and/or an aliphatic diamine component unit having 4 to 12 carbon atoms having side chain, and a derivative thereof; and
(2) a dicarboxylic acid component comprising 40 to 100% by mole of terephthalic acid component unit and 0 to 60% by mole of isophthalic acid component unit, and a derivative thereof.

2. The thermoplastic resin composition according to Claim 1, wherein (2) of the (A) polyamide resin is the following: (2) a dicarboxylic acid-derived structural unit composed of 40 to 100% by mole of a terephthalic acid-derived structural unit and 0 to 60% by mole of at least one structural unit selected from the group consisting of an isophthalic acid-derived structural unit and a structural unit derived from an aliphatic dicarboxylic acid containing 4 to 20 carbons.

3. The thermoplastic resin composition according to Claim 1 or 2, wherein the (B) liquid crystalline polyester amide resin has melting point in a range of from 270°C to 370°C, determined by differential scanning calorimetry (DSC), and gives optical anisotropy during softening and flowing stage.

4. The thermoplastic resin composition according to Claim 1 or 2, wherein the thermoplastic resin composition satisfies at least one conditions of (1) and (2) in the measurement thereof by a differential scanning calorimeter (DSC):
(1) In the measurement by the differential scanning colorimeter (DSC), the crystallization temperature (Tc) of the thermoplastic resin composition shall be higher by 5°C or more than the crystallization temperature (Tc) of the (A) polyamide resin as the matrix resulted from the addition of the (B) liquid-crystalline polyester amide resin; and
(2) The difference (ΔTc) between the on-set temperature and the peak top temperature of the crystallization temperature peak curve shall be not higher than 5°C.

5. The thermoplastic resin composition according to Claim 1 or 2, wherein the (B) liquid crystalline polyester amide resin contains at least one of 4-aminophenl, 1,4-phenylene diamine, 4-amino benzoic acid, and a derivative thereof, as the structuring monomer, and contains an amide component by 2 to 35% by mole of the total bonds.

6. The thermoplastic resin composition according to Claim 1 or 2, wherein the (B) liquid crystalline polyester amide resin contains at least one of 4-aminophenl, 1, 4-phenylene diamine, 4-amino benzoic acid, and a derivative thereof, as the structuring monomer, and contains an amide component by 15 to 35% by mole of the total bonds.

7. The thermoplastic resin composition according to Claim 1 or 2, wherein the (B) liquid crystalline polyester amide resin is an all-aromatic polyester amide prepared by copolymerizing monomers (i) through (iii) at the respective content ranges given below:
(i) 6-hydroxy-2-naphtoic acid: 30 to 90% by mole;
(ii) 4-aminophenol: 15 to 35% by mole; and
(iii) terephthalic acid: 15 to 35% by mole.

8. The thermoplastic resin composition according to Claim 1 or 2, wherein the (B) liquid crystalline polyester amide resin is an all-aromatic polyester amide prepared by copolymerizing monomers (i) through (v) at the respective content ranges given below:
(i) 6-hydroxy-2-naphtoic acid;
(iv) 4-hydroxy benzoic acid;
30 to 90% by mole as that total of (i) and (iv);
(ii) 4-aminophenol: 2 to 35% by mole;
(iii) terephthalic acid: 5 to 35% by mole; and
(v) bisphenol: 2 to 35% by mole.

9. An injection molded article comprising the thermoplastic resin composition according to any of Claims 1 to 8.
